Europäisches Patentamt

European Patent Office

Office européen des brevets

(11) Veröffentlichungsnummer: **0 570 912 A1**

## (12) EUROPÄISCHE PATENTANMELDUNG

(21) Anmeldenummer: **93108093.1**

(22) Anmeldetag: **18.05.93**

(51) Int. Cl.5: **G01G 19/14**, G01G 19/18, B65G 1/127, B66B 1/34

(30) Priorität: **22.05.92 DE 4217073**
**08.04.93 DE 4311695**

(43) Veröffentlichungstag der Anmeldung:
**24.11.93 Patentblatt 93/47**

(84) Benannte Vertragsstaaten:
**AT BE CH DE FR GB IT LI LU NL**

(71) Anmelder: **HÄNEL & CO.**
**Bafflestrasse 21**
**CH-9450 Altstätten SG(CH)**

(72) Erfinder: **Hänel, Michael**
**Hauptstrasse 13**
**W-7107 Bad Friedrichshall(DE)**

(74) Vertreter: **Michelis, Theodor, Dipl.-Ing.**
**Tattenbachstrasse 9**
**D-80538 München (DE)**

(54) **Vorrichtung zur Messung der Traglasten in einem Paternosterschrank.**

(57) Bei einer Vorrichtung zur Messung der Traglasten in einem Paternosterschrank mit mindestens einer Zugangsöffnung, bei dem mehrere, übereinander angeordnete Tragsätze über seitliche Tragarme an zwei elektromotorisch angetriebenen Tragketten angelenkt und Meßvorrichtungen zur Ermittlung der auf die Tragketten einwirkenden Lasten vorgesehen sind, ist zur präzisen Ermittlung der Gewichte sowohl der Einzeltragsätze als auch des Gesamtschrankes erfindungsgemäß vorgesehen, daß die Tragsätze (2) federnd aufgehängt sind und ihre belastungsabhängige Auslenkung gegenüber einem der Tragkette (4) zugeordneten Fixpunkt sensorisch erfaßt ist.

FIG. 2

EP 0 570 912 A1

Die Erfindung bezieht sich auf eine Vorrichtung zur Messung der Traglasten in einem Paternosterschrank mit mindestens einer Zugangsöffnung, bei dem mehrere, übereinander angeordnete Tragsätze über seitliche Tragarme an zwei elektromotorisch angetriebenen Tragketten angelenkt und Meßvorrichtungen zur Ermittlung der auf die Tragketten einwirkenden Lasten vorgesehen sind.

Derartige Paternosterschränke dienen zur platz- und zeitsparenden Unterbringung von Gütern aller Art, wie z.B. Büromaterialien oder Lagergüter. Dabei können insbesondere Werkstatt-Lagergüter die unterschiedlichsten Gewichte aufweisen, so daß die konstruktiv zugelassene Belastung der Träger und damit die Nutzlast pro Tragsatz eines solchen Schrankes je nach Schranktyp sehr verschieden sein und von wenigen Kilogramm bis zu mehreren Tonnen Gewicht variieren kann.

In der Praxis hat es sich gezeigt, daß die Benutzer derartiger Schränke oftmals nicht in der Lage sind, Füll- und Beladungsgewichte richtig einzuschätzen bzw. aus Zeitersparnis die zuzuladenden Güter zu wiegen, so daß es daher leicht zu Überladungen der einzelnen Tragsätze oder auch des gesamten Schrankes kommen kann.

Es ist in diesem Zusammenhang aus der DE 38 25 401 A1 eine Meßvorrichtung zur Ermittlung von Belastungen in solchen Paternosterschränken bekannt, bei der mindestens eine Kettenführungsschiene mit einem Fenster für einen Drucksensor versehen ist, gegen den sich ein am Ende eines Tragarmes angeordnetes Führungsorgan abstützt, wenn sich ein Träger im Bereich der Beschickungsöffnung des Umlaufregals befindet. Mit Hilfe dieses Druckmeßsensors ist es möglich, Überbelastungen des Umlaufregals und die Bildung von Unlasten zu verhindern.

Nachteilig dabei ist, daß jeweils nur ein Tragarm an jeweils einem Kettengliedverbindungsbolzen angreifen kann. Gerade bei sehr hohen Traglasten ist es aber von Vorteil, den auf Druck beanspruchten Tragarm eines oberen Tragsatzes gegen den auf Zug beanspruchten Tragarm eines unteren Tragsatzes abzustützen. Darüberhinaus bringt die bekannte Lösung nur unzureichend genau reproduzierbare Werte für die Trägerbelastung.

Es ist darüberhinaus bekannt, die Füllgüter eines Schrankes über einen Personalcomputer zu verwalten und dabei im Stammsatz die gewogenen Gewichte jedes Einzelstückes zu führen, um damit die Belastung der jeweiligen Tragsätze zu berechnen und geeignete Leerplatzvorschläge zu machen. Hierbei ist jedoch ein sehr sorgfältiges Arbeiten erforderlich, so daß erhebliche Fehler durch nicht richtige Registrierung auftreten können.

Darüberhinaus ist es bekannt, die vorgelagerte Arbeitsplatte des Schrankes selbst als Waage beim Be- und Entladen auszugestalten, um damit Ein- und Auslagerungen zu erfassen. Hierbei können sich kleinere Gewichtsfehler im Laufe der Zeit summieren, so daß damit auf Dauer nicht mehr annähernd realistische Werte entstehen können, die darüberhinaus auch im starken Maße von der Sorgfalt der Benutzer abhängig sind.

Schließlich ist es bekannt, die Gesamtbelastung des Schrankes durch Drucksensoren zu ermitteln, die an den Auflagestellen des Schrankes in den Boden eingelassen oder auf dem Boden angebracht sind. Mit einer solchen Messung sind jedoch Belastungen der einzelnen Tragsätze nicht zu erfassen.

Der gleiche Nachteil gilt auch für bekannte Kraftmeßlager, die z.B. in den oberen Kettenradlagern, an denen die Tragketten aufgehängt sind, angeordnet sein können.

Der vorliegenden Erfindung liegt demgegenüber die Aufgabe zugrunde, eine Vorrichtung zur Messung der Traglasten in einem Pasternosterschrank zu schaffen, mit dem sehr exakt und unabhängig von der Sorgfalt des Bedienpersonals die Belastung sowohl jedes Tragsatzes als auch des gesamten Schrankes ermittelt werden kann und zwar jeweils gleichzeitig mit dem Einlagern oder Auslagern von Gütern oder beim Stillstand des Schrankes.

Zur Lösung dieser Aufgabe ist erfindungsgemäß vorgesehen, daß die Tragsätze gegenüber der Tragkette federnd aufgehängt sind und ihre belastungsabhängige Auslenkung gegenüber einem der Tragkette zugeordneten Fixpunkt sensorisch erfaßt ist.

Dabei ist es zweckmäßig, wenn die Tragsätze gegenüber der Anlenkachse ihrer zugehörigen Tragarme über Federn abgestützt sind und die Abstandsänderung zwischen jeweils einem dem Tragsatz und einem den Tragarmen zugeordneten Fixpunkt mittels eines Sensors ermittelbar ist.

Damit kann also zu jedem beliebigen Betriebszeitpunkt die Belastung jedes einzelnen Tragsatzes und durch entsprechende Summiereinrichtung auch die Belastung aller Tragsätze und damit des gesamten Schrankes ermittelt werden, so daß damit beispielsweise auch Unlasten leicht feststellbar sind.

Dieses Sensorsystem kann aus einem passiven Schwingkreis bestehen, bei dem durch Abstandsänderung eine Induktivität oder eine Kapazität als Empfangsteil des passiven Schwingkreises beeinflußbar sind und daß mittels eines Sendegenerators und induktiver Kopplung von stationärer Sendespule und Empfangsspule am Tragarm die jeweilige Resonanzfrequenz des passiven Schwingkreises ermittelbar ist.

Es ist aber auch möglich, daß das Sensorsystem aus einem dem Tragsatz zugeordneten Magnetsystem und einem dem Tragarm zugeordneten Magnetsystem besteht, dessen Abstandsänderungen durch einen magnetostriktiven Sensor erfaßbar sind.

Bei Anwendung des ersten Sensorsystems ist es zweckmäßig, wenn auf mindestens einer Stirnseite des Tragsatzes eine Mitnehmerplatte befestigt ist, an der ein nach unten offener, U-förmiger Bügel befestigt ist, der im oberen und unteren Bereich je eine quer verlaufende Blattfeder trägt und der mit seitlichem Spiel eine die Aufnahmebuchse für die Traghebel umschließende Kunststoffplatte umfaßt, wobei sich die beiden Blattfedern mittig auf entsprechenden Lagerungen der Kunststoffplatte abstützen derart, daß eine belastungsabhängige, vertikale Verschiebung zwischen Mitnehmerplatte und Aufnahmebuchse ermöglicht ist, und daß zwischen U-förmigem Bügel und Kunststoffplatte der von der jeweiligen Abstandsänderung abhängige Induktivität als Empfangsspule oder Kapazität des passiven Schwingkreises und außerhalb des U-förmigen Bügels am Tragsatz die stationäre Empfangsspule angeordnet sind.

Dabei kann am Basisbereich des U-förmigen Bügels ein sich nach unten erstreckender Ferritkern befestigt sein, der in eine mit einer Spule versehene Ausnehmung an der Oberseite der Kunststoffplatte ragt.

Es ist aber auch möglich, daß an der Unterseite der Kunststoffplatte eine obere Kondensatorplatte und zwischen dem U-förmigen Bügel eine untere Kondensatorplatte mit Abstand zueinander angeordnet sind.

Ferner ist es zweckmäßig, wenn die Kunststoffplatte zwei quer verlaufende Ausnehmungen zur Aufnahme der beiden Blattfedern aufweist und die jeweilige Unterseite der Ausnehmungen zur Mitte hin keilförmig ansteigend als mittiger Abstützpunkt für die Blattfedern ausgebildet ist.

Bei Anwendung des zweiten Sensorsystems ist es zweckmäßig, wenn auf einer Seite oder beiderseits eines Tragsatzes eine Mitnehmerplatte angeschraubt ist, an der ein nach unten offener, U-förmiger Bügel befestigt ist, der mit seitlichem Spiel einen die Aufnahmebuchse für die Traghebel tragenden Doppel-T-Träger umfaßt und gegenüber der Oberseite des T-Trägers über Federn abgestützt ist und daß das eine Magnetsystem dem U-förmigen Bügel und das andere Magnetsystem dem Doppel-T-Träger zugeordnet ist, denen gegenüberstehend der Sensor zur Ermittlung der Abstandsänderungen der Magnetsysteme angeordnet ist.

Anhand einer schematischen Zeichnung sind Aufbau und Funktionsweise von Ausführungsbeispielen nach der Erfindung näher erläutert:

Fig. 1     einen Paternosterschrank in perspektivischer, teilgeschnittener Ansicht;

Fig. 2     die perspektivische Ansicht eines Ausschnittes einer Tragsatzaufhängung;

Fig. 3     eine perspektivische Seitenansicht eines Tragsatzes mit einer entsprechenden Meßvorrichtung;

Fig. 4     eine Aufsicht von oben auf die eine Seite des Tragsatzes entspr. Fig. 3;

Fig. 5     eine perspektivische Seitenansicht eines Tragsatzes mit einer Variante der Meßvorrichtung nach Fig. 3;

Fig. 6     einen Schaltplan der sensorischen Erfassung der Abstandsänderungen durch einen passiven Schwingkreis, und

Fig. 7     eine perspektivische Seitenansicht eines Tragsatzes mit einer weiteren Variante der Meßvorrichtung.

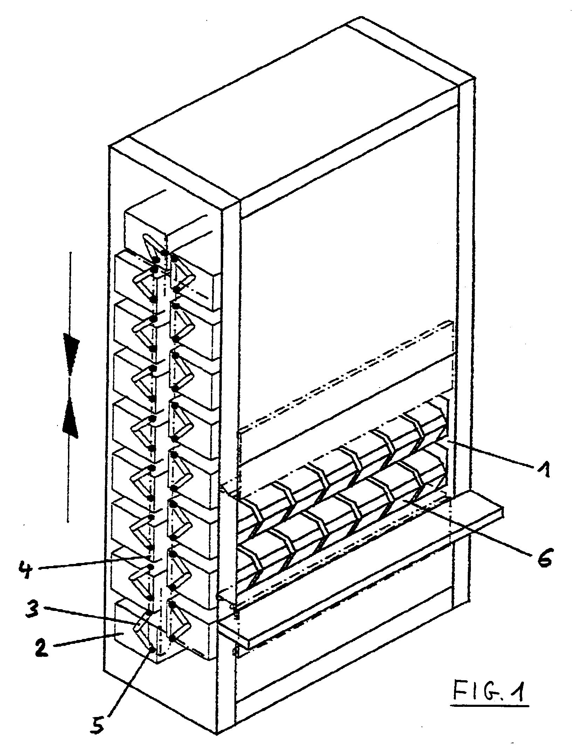

Fig. 1 zeigt in perspektivischer Ansicht einen Paternosterschrank, bei dem zur besseren Darstellung die linke Seitenwand weggelassen ist. Dieser Paternosterschrank weist eine Zugangsöffnung 1 zum Be- und Entladen mit Füllgütern aller Art auf. Der eigentliche Paternoster enthält eine Vielzahl von Tragsätzen 2, die über Traghebel 3 an Kettengliederverbindungsbolzen 5 der Tragketten 4 angelenkt sind. Diese Tragketten 4 sind jeweils links und rechts der Entnahmeöffnung an den beiden Stirnseiten der Tragsätze 2 angeordnet, wobei hier nur die linke Tragkette 4 gezeigt ist.

Die pasternosterartig übereinander angeordneten Tragsätze sind durch einen nicht näher dargestellten elektromotorischen Antrieb über einen gesonderten Kettentrieb angetrieben. Die Tragsätze 2 können mit Füllgütern aller Art beladen sein, wobei hier beispielhaft Lagerkästen 6 eingezeichnet sind.

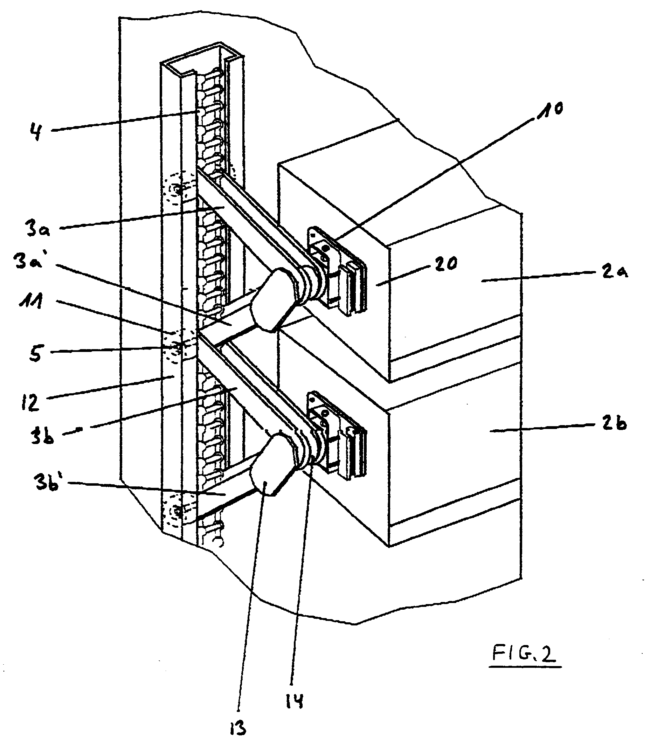

In Fig. 2 ist im Teilausschnitt eine Seitenansicht des Schrankes im Bereich der Aufhängung der Tragsätze dargestellt, wobei hier zwei Tragsätze 2a und 2b gezeigt sind. Jeder Tragsatz 2 ist über eine spezielle Aufhängevorrichtung 10, die noch später im einzelnen erläutert wird, über zwei Traghebel 3a und 3b an der Tragkette 4 abgestützt. Dabei stützt sich der untere, auf Druck belastete Tragarm 3a' des oberen Tragsatzes 2a auf dem gleichen Kettengliedverbindungsbolzen ab, an dem der obere, auf Zug belastete Tragarm 3b des unteren Tragsatzes 2b angelenkt ist. Die in der Tragschiene 12 geführten Tragrollen 11 werden dabei bei gleichmäßiger Belastung der Tragsätze weder an die vordere noch an die hintere Auflagefläche dieser Tragschiene 12 angepreßt.

Über Hebel 13 an den vorderen Enden der Traghebelbuchse 14 werden die Tragsätze 2 in nicht näher dargestellten Schienen so geführt, daß ein Kippen des Tragsatzes nach hinten oder vorne verhindert wird.

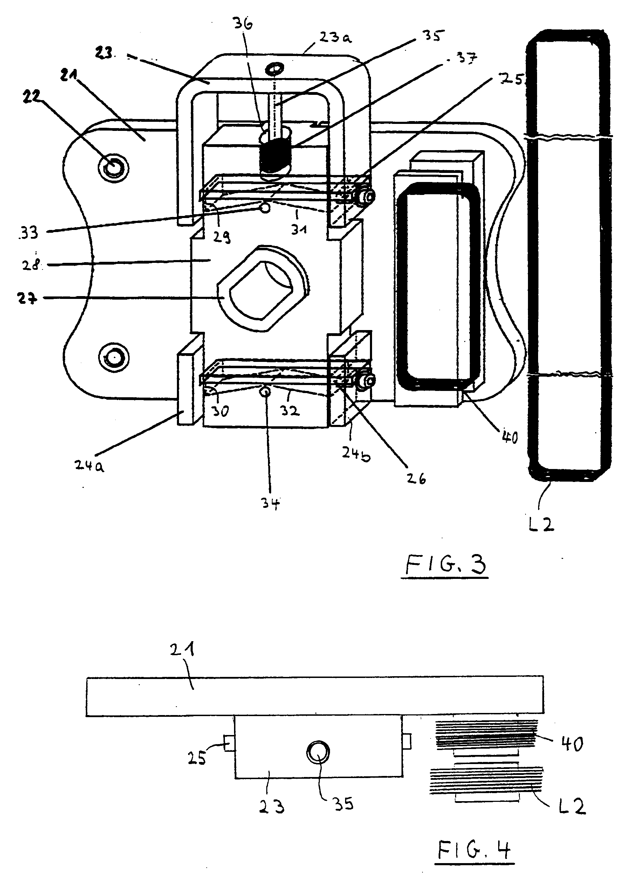

In Fig. 3 ist die eigentliche Aufhängung eines solchen Tragsatzes im einzelnen dargestellt. Dabei ist an die seitliche Stirnwand 20 eines Tragsatzes 2 - wie aus Fig. 2 ersichtlich - über Gewindebohrungen 22 zunächst eine Mitnehmerplatte 21 befestigt, die die Last des Tragsatzes aufnimmt. Auf der Vorderseite dieser Mitnehmerplatte 21 ist ein U-förmiger Bügel 23 starr befestigt. Dieser U-förmige Bügel 23 ist bei dem dargestellten Ausführungsbeispiel mittig unterbrochen und besteht somit aus dem oberen Bügelteil 23a und den beiden unteren von der Mitnehmerplatte 21 nach vorn abragenden Stegen 24a und 24b. Zwischen dem unteren Ende des Bügelteils 23a und den unteren Stegen 24a und 24b sind nunmehr zwei Blattfedern 25 und 26 angeordnet, die beiderseits in den entsprechenden Bügelbereichen gehaltert sind.

Der U-förmige Bügel 23 umschließt dabei die Buchse 27, in die die nicht näher dargestellte Anlenkachse für die beiden Traghebel 3 bzw. 3'eingreift. Die Buchse 27 ist dabei von einer angespritzten Kunststoffplatte 28 angenähert rechteckigen Querschnittes umschlossen, die mit Spiel zur Führung des mit der Mitnehmerplatte 21 verbundenen Bügels 23 dient. Diese Kunststoffplatte 28 weist zunächst zwei gestrichelt angedeutete Ausnehmungen 29 und 30 zur Aufnahme der beiden Blattfedern 25 und 26 auf. Dabei sind die jeweiligen Unterseiten 31 und 32 dieser Ausnehmungen 29 und 30 zur Mitte hin keilförmig ansteigend ausgebildet und weisen in ihrem höchsten Punkt jeweils eine eingegossene Lagerung 33 und 34 auf, auf der sich die Blattfedern 25 und 26 in ihrer Mitte abstützen.

Als eigentliches Meßsystem ist am oberen Bügelteil 23a ein sich nach unten erstreckender Ferritkern 35 befestigt, der in eine Ausnehmung 36 auf der Oberseite der Kunststoffplatte 28 ragt, wobei diese Ausnehmung 36 mit einer Spule 37 ausgekleidet ist. Außerhalb des Bügels 23 befindet sich die Empfangsspule 40, die an der Mitnehmerplatte 21 befestigt sein kann, wobei die Funktion dieses Sensorsystems noch später erläutert wird.

In nicht maßstäblicher Darstellung ist noch die Sndespule L2 angedeutet, die sehr viel länger als die Empfangsspule 40 sein muß, da die Tragkörbe auf unterschiedlicher Höhenstellung anhalten können.

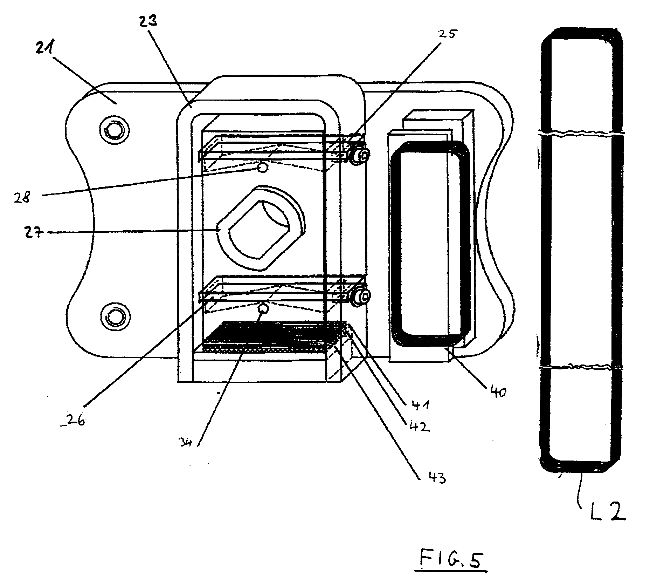

In Fig. 4 ist in Aussicht auf die Darstellung nach Fig. 3 die richtige Zuordnung von Empfangsspule 40 und stationärer Sndesoule L2 gezeigt, die jeweils dicht voreinander liegen müssen.

In Fig. 5 ist eine Variante dieses Sensorsystems dargestellt, wobei hier zunächst der gleiche Grundaufbau mit Mitnehmerplatte 21, U-förmigem Bügel 23, Blattfedern 25 und 26 sowie Buchse 27 mit Kunststoffplatte 28 verwendet ist. Nach dem hier dargestellten Ausführungsbeispiel ist an der Unterseite der Kunststoffplatte 28 eine obere Kondensatorplatte 41 und unterhalb davon eine Kondensatorplatte 42 vorgesehen, die zwischen den unteren Enden des Bügels 23 oder unmittelbar an der Mitnehmerplatte festgelegt ist. Diese untere Kondensatorplatte 42 kann dabei in eine Vergußmasse 43 eingegossen und staubschützend untergebracht sein.

Diese beiden Kondensatorplatten 41 und 42 sind Teil eines passiven Schwingkreises, der aus einer Induktivität und einer Kapazität besteht. Zur Anregung des passiven Schwingkreises ist außerhalb des Bügels 23 am Tragsatz bzw. der Mitnehmerplatte 21 die Empfangsspule 40 angebracht und in Analogie zu Fig. 3 und 4 die Sendespule L2.

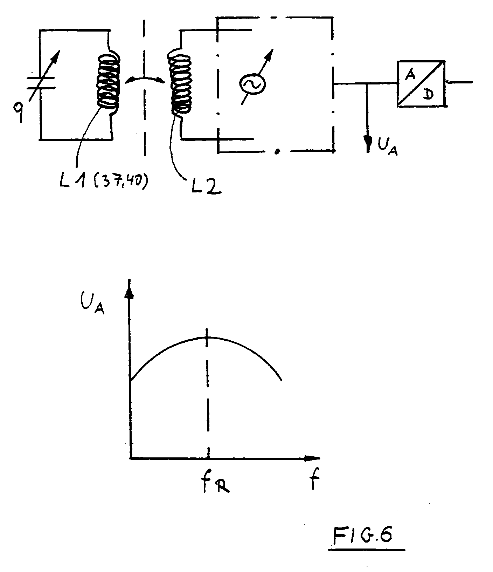

In Fig. 6 ist vereinfacht die sensorische Erfassung bzw. der passive Schwingkreis dargestellt.

Auf der linken Seite ist der Kondensator C1 und die Induktivität L1 , die von der Induktivität 37 und 40 gebildet sein kann, dargestellt, die den jeweiligen Tragsätzen zugeordnet sind. Auf der rechten Seite ist der stationäre Teil, nämlich eine zur Empfangsspule L1 parallel liegende Sendespule L2 gezeigt, d.h. die Induktivität L2, die durch einen Generator angeregt wird und durch induktive Kopplung den Schwingkreis aus L1 und C1 anregt.

Für die Resonanzfrequenz gilt dabei die Formel:

$$f = \frac{1}{2 \quad LC}$$

Durch Veränderung von Induktivität oder Kapazität auf der Tragsatzseite ergibt sich bei Konstanthaltung der jeweils anderen Größe eine spezielle Resonanzfrequenz. Durch eine entsprechende, hier nicht näher dargestellte Auswertelektronik ist es möglich, die sich ergebende Ausgangsspannung $U_A$ über der Frequenz f aufzuzeichnen und über ihr Maximum die Resonanzfreqenz $f_R$ entsprechend des gezeigten Diagramms zu bestimmen. Diese Kenngröße kann dann über einen Analog-/Digital-Wandler weiter verarbeitet werden.

Die Funktionsweise der in den Ausführungsbeispielen nach Fig. 3 und 5 dargestellten Anordnungen ist nunmehr die folgende:
Die Stauchung der Federn 25 und 26 ist im allgemeinen proportional zur Summe aus Eigengewicht eines Tragsatzes 2 und der Tragsatzzuladung. Dabei sind durch die Formgebung der Tragsätze diese sehr unterschiedlich, so daß sich damit auch unterschiedliche Eigengewichte ergeben. Dies ist jedoch von untergeordneter Bedeutung, da im wesentlichen nur die Summe aus Eigengewicht des Tragsatzes und der Tragsatzzuladung interessiert, da allein dieser Wert wegen der Maximalbelastbarkeit der Tragketten 4 sowie der Tragarme 3 die bestimmende Größe des jeweiligen Schranktyps darstellen. Daraus folgt auch, daß die Zuladung eines Tragsatzes umso höher sein kann, je leichter das Eigengewicht dieses Tragsatzes ist.

Bezüglich der vorstehend erläuterten Belastungsermittlung ist stationär im Gehäuse des Schrankes - wie bereits zu Fig. 5 erläutert - ein Generator mit Sendespule L2 angeordnet. Auf jedem Tragsatz 2 befindet sich eine Empfangsspule L1 als Teil eines Schwingkreises aus Induktivität und Kapazität. Je nach Zuladung und damit Gewicht des Tragsatzes sowie der dadurch bedingten Stauchung der Federn 25 und 26 ändert sich die Abstimmung des passiven Schwingkreises, die als Resonanzfrequenz festgestellt wird.

Der Schwingkreis wird dabei durch den Generator über die Sendespule und induktiver Kopplung zwischen der Sende- und Empfangsspule angeregt. Es wird dann das Frequenzband, in dem sich die Resonanzfrequenz des Schwingkreises befindet, ausgesucht und über das Maximum der Ausgangsspannung $U_A$ die Resonanzfrequenz ermittelt.

Es ist also möglich, die Sensorsignale so auszuwerten, daß die Resonanzfrequenz und damit die Veränderung der Induktivität oder Kapazität ermittelt wird, um daraus bei Kenntnis der entsprechenden Kennlinie das Gewicht aus Tragsatz und Zuladung genau zu bestimmen.

Dabei kann das auf einer Seite eines Tragsatzes dargestellte Sensorsystem aber auch auf beiden Stirnseiten eines Tragsatzes angebracht werden, um damit beispielsweise auch die unterschiedliche Beladung eines Tragsatzes über seine Länge gesehen festzustellen.

Anstelle der vorstehend beschriebenen Sensoranordnung sind aber auch andere sensorische Erfassungen denkbar. So sind beispielsweise Wegsensoren möglich, die aus einem Gebermagneten und einem weichmagnetischen Sensorelement bestehen, wobei der Dauermagnet dabei zu einer magnetischen Sättigung des Kerns führt und die Position des gesättigten Bereiches gemessen wird.

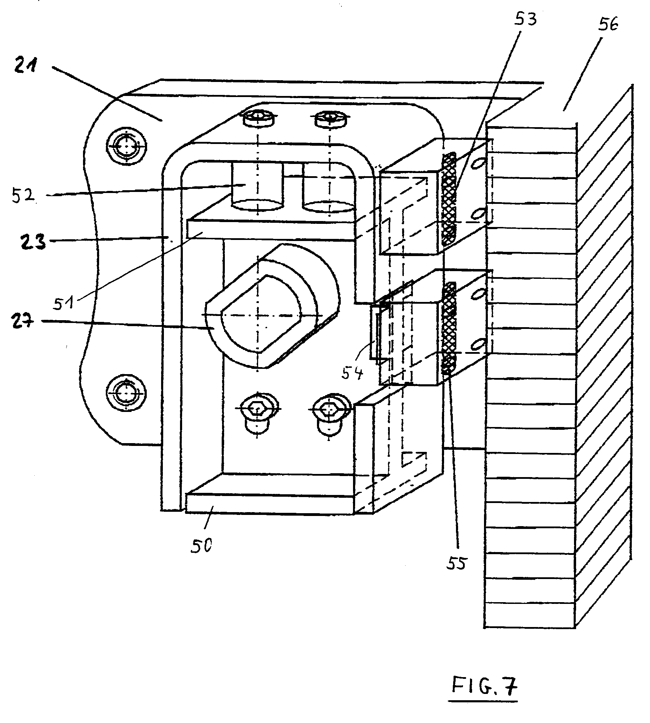

Es sind aber auch Gebermagnete möglich, die von einem Positionsmeßsystem in Multiplexschaltung aus magnetorestriktiven Sensoren hinsichtlich ihrer Position erfaßt werden können. Eine solche Anordnung ist beispielsweise in Fig. 7 dargestellt. Auch hier ist der Tragsatz beiderseits an Mitnehmerplatten 21 angeschraubt, an denen nach unten offene U-förmige Bügel 23 befestigt sind, die mit seitlichem Spiel einen die Aufnahmebuchse 27 für die Traghebel tragenden Doppel-T-Träger 50 umfassen. Dieser Bügel 23 ist dabei gegen die Oberseite 51 des Trägers 50 über Federn 52 abgestützt, die aus Gummifedern oder Tellerfedern bestehen können und eine solche Federkennlinie aufweisen, daß damit ein relativ großer Federweg bei Belastung der Tragsätze möglich ist.

Für das eigentliche Meßsystem ist seitlich am U-förmigen Bügel 23 ein Stabmagnet 53 angeordnet, während in gleicher Ebene darunter in einem Ausschnitt des U-förmigen Bügels 23 über entsprechende Halterungen 54 ein weiterer Stabmagnet 55 am Doppel-T-Träger 50 befestigt ist. Das bedeutet, daß der eine Magnet 53 einem einzelnen Tragsatz 2 und der andere Magnet 55 den Tragarmen 3 bzw. der Tragkette 4 starr zugeordnet ist.

Gegenüberstehend zu diesen beiden Magneten 53 und 55 ist schematisch ein Sensor 56 angeordnet, der nach dem magnetostriktiven Prinzip arbeitet. Dieser Sensor 56 besteht über die Meßstrecke hinweg aus einer großen Anzahl von magnetostriktiven Elementarsensoren, die hier jeweils als Scheiben gekennzeichnet sind.

Durch eine entsprechende, hier nicht näher dargestellte Sensorelektronik, z.B. durch eine Multiplexschaltung, ist es möglich, die Position der Gebermagnete 53 und 55 auf 1/100 mm zu erfassen.

Ingesamt also ist es durch die beschriebenen Anordnungen und Sensorsysteme möglich, mit einer entsprechenden Auswerteelektronik die Belastung jedes der Tragsätze 2 zu erfassen. Somit kann auch die jeweilige Zuladung eines jeden Tragsatzes, eine mögliche weitere Zuladung für einen solchen Tragsatz, die vorhandene sowie die maximale Gesamtbelastung sowie möglicherweise auch eine vorhandene Unlast im Schrank auf einfache Weise ermittelt und angezeigt werden.

Damit wird eine größere Sicherheit für den gesamten Schrank gewährleistet und der Benutzer kann die Belastbarkeit des Schrankes bzw. der einzelnen Tragsätze voll ausschöpfen. Die jeweils interessierenden Werte sind dabei ohne zusätzlichen Aufwand, z.B. über eine Mikroprozessorsteuerung, ständig reproduzierbar.

**Patentansprüche**

1. Vorrichtung zur Messung der Traglasten in einem Paternosterschrank mit mindestens einer Zugangsöffnung, bei dem mehrere, übereinander angeordnete Tragsätze über seitliche Tragarme an zwei elektromotorisch angetriebenen Tragketten angelenkt und Meßvorrichtungen zur Ermittlung der auf die Tragkette einwirkenden Lasten vorgesehen sind, dadurch gekennzeichnet, daß die Tragsätze (2) gegenüber der Tragkette (4) federnd aufgehängt sind und ihre belastungsabhängige Auslenkung gegenüber einem der Tragkette (4) zugeordneten Fixpunkt sensorisch erfaßt ist.

2. Vorrichtung nach Anspruch 1, dadurch gekennzeichnet, daß die Tragsätze (2) gegenüber der Anlenkachse (27) ihrer zugehörigen Tragarme (3) über Federn (25, 26; 52) abgestützt sind und die Abstandsänderung zwischen jeweils einem dem Tragsatz (2) und einem den Tragarmen (3) zugeordneten Fixpunkt mittels eines Sensors (37, 40; L2; 41, 42; L2; 53, 55; 56) ermittelbar ist.

3. Vorrichtung nach Anspruch 2, dadurch gekennzeichnet, daß das Sensorsystem aus einem passiven Schwingkreis besteht, bei dem durch Abstandsänderung eine Induktivität (37, 40) oder eine Kapazität (41, 42) als Teil Empfangsteil des passiven Schwingkreises beeinflußbar sind, und daß mittels eines Sendegenerators und induktiver Kopplung von stationärer Sendespule (L2) und Empfangsspule (37, 40) am Tragarm (3) die jeweilige Resonanzfrequenz des passiven Schwingkreises ermittelbar ist.

4. Vorrichtung nach Anspruch 2, dadurch gekennzeichnet, daß das Sensorsystem aus einem den Tragsatz (2) zugeordneten Magnetsystem (53) und einem dem Tragarm (3) zugeordneten Magnetsystem (55) besteht, dessen Abstandsänderungen durch einen magnetostriktiven Sensor (56) erfaßbar sind.

5. Vorrichtung nach Anspruch 2 und 3, dadurch gekennzeichnet, daß mindestens auf einer Stirnseite eines Tragsatzes (2) eine Mitnehmerplatte (21) festgelegt ist, an der ein nach unten offener, U-förmiger Bügel (23) befestigt ist, der im oberen und unteren Bereich je eine quer verlaufende Blattfeder (25, 26) trägt und der mit seitlichem Spiel eine die Aufnahmebuchse (27) für die den Traghebel (3) umschließende Kunststoffplatte (28) umfaßt, wobei sich die beiden Blattfedern (25, 26) mittig auf entsprechenden Lagerungen (33, 34) der Kunststoffplatte (28) abstützen derart, daß eine belastungsabhängige, vertikale Verschiebung zwischen Mitnehmerplatte (21) und Aufnahmebuchse (27) ermöglicht ist, und daß zwischen U-förmigem Bügel (23) und Kunststoffplatte (28) die von der jeweiligen Abstandsänderung abhängige Induktivität (37, 40) als Empfangsspulen oder Kapazität (41, 42) des passiven Schwingkreises und außerhalb des U-förmigen Bügels (23) die stationäre Sendespule (L2) angeordnet ist.

6. Vorrichtung nach Anspruch 5, dadurch gekennzeichnet, daß am Basisteil (23a) des U-förmigen Bügels (23) ein sich nach unten erstreckender Ferritkern (35) befestigt ist, der in eine mit einer Spule (37) versehene Ausnehmung (36) an der Oberseite der Kunststoffplatte (28) ragt.

7. Vorrichtung nach Anspruch 5, dadurch gekennzeichnet, daß an der Unterseite der Kunststoffplatte (28) eine obere Kondensatorplatte (41) und zwischen dem U-förmigen Bügel (23) eine untere Kondensatorplatte (42) mit Abstand zueinander angeordnet sind.

8. Vorrichtung nach Anspruch 5, dadurch gekennzeichnet, daß die Kunststoffplatte (28) zwei quer verlaufende Ausnehmungen (29, 30) zur Aufnahme der beiden Blattfedern (25, 26) aufweist und daß die jeweilige Unterseite (31, 32) der Ausnehmungen (29, 30) zur Mitte hin keilförmig ansteigend als mittiger Abstützpunkt für die Blattfedern (25, 26) ausgebildet ist.

9. Vorrichtung nach Anspruch 2 und 4, dadurch gekennzeichnet, daß auf der Mitnehmerplatte (21), die auf einer Stirnseite eines Tragsatzes (2) angeschraubt ist, ein nach unten offener U-förmiger Bügel (23) befestigt ist, der mit seitlichem Spiel einen die Aufnahmebuchse (27) für die Traghebel (3) Doppel-T-Träger (50) umfaßt und gegenüber der Oberseite (51) des Doppel-T-Trägers (50) über Federn (52) abgestützt ist und daß das eine Magnetsystem (53) dem U-förmigen Bügel (23) und das andere Magnetsystem (55) dem Doppel-T-Träger (55) zugeordnet ist, denen gegenüberstehend ein magnetorestriktiver Sensor (56) zur Ermittlung der Abstandsänderungen der Magnetsysteme (53, 55) angeordnet ist.

10. Vorrichtung nach einem oder mehreren der Ansprüche 1 bis 9, dadurch gekennzeichnet, daß auf jeder Seite eines Tragsatzes (2) entsprechende Abstützungs- und Sensorsysteme vorgesehen sind.

FIG. 1

FIG. 2

FIG. 3

FIG. 4

FIG.5

L1 (37,40)  L2

FIG.6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 825 401 (BELLHEIMER METALLWERKE G.M.B.H.) <br> * Ansprüche 1-3 * <br> --- | 1,2 | G01G19/14 <br> G01G19/18 <br> B65G1/127 <br> B66B1/34 |
| A | DE-A-3 504 751 (BELLHEIMER METALLWERKE G.M.B.H.) <br> * Seite 6, Zeile 25 - Seite 6, Zeile 32; Anspruch 1 * <br><br> ----- | 1,2 | |

| | RECHERCHIERTE SACHGEBIETE (Int. Cl.5) |
|---|---|
| | G01G <br> B65G <br> B66B |

Der vorliegende Recherchenbericht wurde für alle Patentansprüche erstellt

| Recherchenort | Abschlußdatum der Recherche | Prüfer |
|---|---|---|
| DEN HAAG | 11 AUGUST 1993 | VITZTHUM |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes Dokument